# FASCICULE DE BREVET EUROPEEN

(11) **EP 4 198 659 B1**
(45) Date de publication et mention de la délivrance du brevet: **16.07.2025**
(21) Numéro de dépôt: 21306770.5
(22) Date de dépôt: 14.12.2021
(51) Int. Cl.: G05B 19/05, G05B 19/418, G06Q 50/04, G05B 19/048, G05B 19/042, G05B 9/02, G06F 11/16, G05B 9/03

(54) **SYSTÈME ET PROCÉDÉ DE COMMANDE À HAUTE DISPONIBILITÉ D'UN PROCESSUS INDUSTRIEL**
STEUERUNGSSYSTEM UND VERFAHREN MIT HOHER VERFÜGBARKEIT FÜR EINEN INDUSTRIELLEN PROZESS
CONTROL SYSTEM AND METHOD WITH HIGH AVAILABILITY FOR AN INDUSTRIAL PROCESS

(43) Date de publication de la demande: 21.06.2023
(73) Titulaire: Worldgrid France SAS, 95870 Bezons (FR)
(72) Inventeur: PEBAY PEYROULA, François, 38180 SEYSSINS (FR); GIRAUD, Christian, 38450 VIF (FR); HOCQUETTE, Jean-Claude, 38920 CROLLES (FR); ANTHOINE, Jacques, 74330 SILLINGY (FR); BOURIOT, Nicolas, 38410 VAULNAVEYS LE HAUT (FR); TISSOT, Jean-Claude, 38240 MEYLAN (FR)
(74) Mandataire: Novagraaf Technologies

(56) Documents cités:
- EP-A1- 0 346 804
- DE-U1- 202005 020 802
- US-A1- 2015 316 923
- US-A1- 2015 323 910

## Description

### DOMAINE TECHNIQUE DE L'INVENTION

Le domaine technique de l'invention est celui des systèmes et procédés de commande d'un processus industriel et plus particulièrement celui des systèmes et procédés de commande à haute disponibilité d'un processus industriel.

La présente invention concerne un système de commande d'un processus industriel et en particulier un système de commande à haute disponibilité d'un processus industriel. La présente invention concerne également un procédé de commande mis en œuvre par le système et un produit-programme d'ordinateur.

### ARRIERE-PLAN TECHNOLOGIQUE DE L'INVENTION

Pour la conduite de processus industriels fonctionnant en continu, comme par exemple le processus de triage dans une gare de triage ou encore le processus automatique de fabrication d'un dispositif dans une usine, il est courant d'avoir recours à une architecture SCADA (pour « Supervisory Control And Data Acquisition ») réalisant l'acquisition de données et la commande en temps réel d'un processus industriel via des automates programmables industriels, en calculant à partir des données acquises, des informations sur l'état du processus industriel utilisées pour sa commande et sa supervision.

Pour assurer la sûreté du processus industriel et donc plus particulièrement dans le cas de la conduite de processus industriels critiques, comme par exemple le processus de gestion de la fourniture d'énergie par un réseau électrique ou par une centrale de production électrique, ou de l'eau par une usine de traitement des eaux, il est indispensable d'avoir recours à une architecture à haute disponibilité, c'est-à-dire à une architecture entièrement redondante permettant de répondre à des exigences de disponibilité sur une période ayant une durée supérieure à une dizaine d'années.

Les architectures SCADA existantes sont de manière générale non redondantes.

US2015/316923 A1 et US2015/323910 A1 concernent la commande de systèmes industriels à grande échelle. EP0346804 A1 concerne la commande d'un poste d'aiguillage.

Il existe des systèmes numériques de contrôle commande ou SNCC à haute disponibilité mais ces systèmes ne peuvent gérer qu'un unique modèle d'automates à haute disponibilité, et donc un unique mode de fonctionnement basé sur un même type de données et une même gestion de la redondance.

Or, de nombreux processus industriels utilisent plusieurs modèles d'automates différents, ce qui implique de gérer chaque mode de fonctionnement, c'est-à-dire chaque type de données et chaque gestion de la redondance, pour garantir une cohérence temporelle et une unicité à la fois des données acquises par les différents modèles d'automates et des informations calculées à partir des données acquises, et ainsi éviter de réaliser des calculs à partir de données relatives à des instants différents du processus.

Il existe donc un besoin d'un système de conduite de processus industriel fiable qui remplisse les exigences de haute disponibilité et qui soit capable de gérer plusieurs modèles d'automates à haute disponibilité en garantissant la cohérence temporelle et l'unicité des données acquises et des informations calculées.

### RESUME DE L'INVENTION

L'invention offre une solution aux problèmes évoqués précédemment, en proposant un système de commande d'un processus industriel entièrement redondant, répondant à des exigences de disponibilité supérieures à une dizaine d'années, comprenant plusieurs modèles d'automates entièrement redondants et évitant la survenue d'aléas temporels.

Un premier aspect de l'invention concerne un système de commande à haute disponibilité d'un processus industriel comprenant :
- Une pluralité de postes opérateurs comprenant une interface graphique configuré pour :
   - recevoir des consignes d'un opérateur via l'interface graphique ;
   - afficher à un instant courant et sur demande de l'opérateur, un sous-ensemble d'informations d'un ensemble d'informations relatives au processus industriel, l'ensemble d'informations comprenant un groupe d'informations pour chaque instant d'acquisition d'une pluralité d'instants d'acquisition précédant l'instant courant ;
- Un module d'interface configuré pour collecter d'une pluralité d'automates programmables industriels présentant chacun un modèle d'automate, des données, chaque donnée étant associée à un instant d'acquisition de la pluralité d'instants d'acquisition, le module d'interface comportant au moins un couple de calculateurs pour chaque modèle d'automate, chaque calculateur du couple de calculateurs étant configuré pour :
   - collecter chaque donnée reçue par chaque automate présentant le modèle d'automate et éliminer chaque donnée reçue en double ;
   - envoyer à au moins un automate, au moins une commande dépendant des données collectées et/ou de consignes fournies par l'opérateur ;
   les calculateurs du module d'interface fonctionnant en redondance asynchrone ;
- Un module de traitement comportant un couple de calculateurs, chaque calculateur du couple de calculateurs étant configuré pour :
   - recevoir de chaque calculateur du module d'interface, au moins une partie des données collectées ;
   - trier les données reçues en fonction de leur instant d'acquisition et éliminer les données reçues en double ;
   - calculer pour chaque instant d'acquisition, le groupe d'informations correspondant à partir des données triées correspondantes ;
   les calculateurs du module de traitement fonctionnant en redondance active ;
- Un module de gestion des postes opérateurs comportant un calculateur pour chaque poste opérateur, chaque calculateur étant configuré pour :
   - recevoir chaque groupe d'informations calculé ;
   - envoyer au poste opérateur correspondant, chaque groupe d'informations correspondant au sous-ensemble d'informations demandé ;
   - gérer l'interface graphique du poste opérateur correspondant ;
- Un réseau de communication doublé présentant une première voie et une deuxième voie distinctes, comprenant un module de redondance répartie sur chaque calculateur du système, chaque calculateur du système étant configuré pour :
   - envoyer au module de redondance, chaque message destiné à au moins un autre calculateur du système, simultanément sur la première voie et la deuxième voie ;
   - recevoir chaque message qui lui est destiné du module de redondance et envoyer un acquittement au module de redondance ;
   le module de redondance étant configuré pour :
   - recevoir le message envoyé via la première voie et via la deuxième voie ;
   - effacer le message reçu via la deuxième voie si le message a été reçu via la première voie ;
   - modifier le message reçu en ajoutant une demande d'acquittement ;
   - diffuser vers l'autre calculateur du système, le message modifié simultanément sur la première voie et la deuxième voie.

Grâce à l'invention, un couple de calculateurs du module d'interface récupère les données acquises par une unique technologie d'automate et élimine les doublons, ce qui permet le découplage entre la gestion de la redondance de chaque technologie d'automate et la gestion de la redondance par le système selon l'invention. Au niveau du module d'interface, la redondance est assurée par chaque couple de calculateurs fonctionnant en redondance asynchrone, c'est-à-dire que chaque calculateur réalise les mêmes tâches sur les données qui lui sont affectées sans synchronisation avec les autres calculateurs.

Le couple de calculateurs du module de traitement récupère les données acquises par chaque couple de calculateurs du module d'interface et les ordonne temporellement en supprimant les doublons, ce qui permet d'assurer la cohérence temporelle et l'unicité des données. Les informations nécessaires à la commande du processus sont ensuite calculées à partir des données triées et donc cohérentes temporellement. Au niveau du module de traitement, la redondance est assurée par le couple de calculateurs fonctionnant en redondance active, c'est-à-dire réalisant les mêmes tâches simultanément et envoyant uniquement les informations calculées par l'un des calculateurs.

Chaque calculateur du module de gestion des postes opérateurs récupère les informations calculées et envoient au poste opérateur associé les informations demandées par l'opérateur. Chaque poste opérateur étant identique, la redondance est assurée au niveau des postes opérateurs.

Suite à l'affichage des informations demandées, l'opérateur peut fournir une consigne via l'interface graphique d'un poste opérateur pour modifier la commande du processus industriel. La consigne est transmise à au moins un automate concerné via une commande émise par le couple de calculateurs du module d'interface correspondant.

Lors des communications entre calculateurs, la redondance est assurée par le doublement du réseau de communication et la cohérence temporelle est assurée par le module de redondance utilisant un mécanisme d'acquittement pour assurer la bonne réception simultanée des messages par l'ensemble des calculateurs destinataires.

La cohérence temporelle et l'unicité des données et informations, ainsi que la redondance sont donc assurées en chaque point du système qui répond donc aux exigences de haute disponibilité et de fiabilité.

Outre les caractéristiques qui viennent d'être évoquées dans le paragraphe précédent, le système selon l'invention peut présenter une ou plusieurs caractéristiques complémentaires parmi les suivantes, considérées individuellement ou selon toutes les combinaisons techniquement possibles.

Selon une variante de réalisation, le système selon l'invention comporte en outre une base de données répartie sur au moins une partie des calculateurs du système, configurée pour stocker et gérer les données et les informations.

Ainsi, la base de données répartie sur les calculateurs du système gère une vue cohérente de toutes les données et informations représentatives de l'état du processus industriel, garantissant tout risque d'aléa temporel.

Selon une variante de réalisation compatible avec la variante de réalisation précédente, le système selon l'invention comporte en outre un module d'instant courant comportant une pluralité de calculateurs, chaque calculateur du module d'instant courant étant configuré pour :
- répliquer au moins une partie des données et des informations du module de traitement ;
- fournir au module de gestion des postes opérateurs, les données et les informations répliquées correspondant à l'instant d'acquisition précédant immédiatement l'instant courant ;
les calculateurs du module d'instant courant fonctionnant en redondance fonctionnelle.

Ainsi, les calculateurs du module d'instant courant gèrent les données relatives à l'instant courant et donc les modifications à apporter à l'affichage des postes opérateurs en temps réel et décharge ainsi les calculateurs du module de gestion des postes opérateurs. Au niveau du module d'instant courant, la redondance est assurée par la pluralité de calculateurs fonctionnant en redondance fonctionnelle, c'est-à-dire réalisant les mêmes tâches simultanément.

Selon une variante de réalisation compatible avec les variantes de réalisation précédentes, le système selon l'invention comporte en outre un module d'archivage comportant une pluralité de calculateurs, chaque calculateur du module d'archivage étant configuré pour :
- répliquer et archiver une partie des données et des informations du module de traitement ;
- fournir au module de gestion des postes opérateurs, les données et les informations archivées correspondant à chaque instant d'acquisition précédant l'instant d'acquisition précédant immédiatement l'instant courant.

Ainsi, les calculateurs du module d'archivage gèrent les données à afficher non relatives à l'instant courant, c'est-à-dire les données d'archives, et décharge ainsi les calculateurs du module de gestion des postes opérateurs. Au niveau du module d'archivage, la redondance est assurée par la pluralité de calculateurs fonctionnant en redondance fonctionnelle.

Selon une variante de réalisation compatible avec les variantes de réalisation précédentes, la partie des données collectées reçue par chaque calculateur du module de traitement correspond aux données collectées par chaque calculateur du module d'interface modifiées entre deux instants d'acquisition successifs.

Ainsi, le système fonctionne en mode événementiel, c'est-à-dire que seules les données et informations modifiées entre deux instants successifs sont transmises, ce qui permet de diminuer le trafic dans le système.

Un deuxième aspect de l'invention concerne un procédé de commande d'un processus industriel mis en œuvre par le système selon l'invention, comprenant les étapes suivantes :
- Pour chaque calculateur de chaque couple de calculateurs du module d'interface, collecte de chaque donnée reçue par chaque automate présentant un modèle d'automate correspondant et élimination de chaque donnée reçue en double, chaque donnée étant associée à un instant d'acquisition précédant un instant courant ;
- Réception par chaque calculateur du module de traitement, d'au moins une partie des données collectées par le module d'interface, tri des données reçues en fonction de leur instant d'acquisition, élimination des données reçues en double et calcul d'un groupe d'informations pour chaque instant d'acquisition à partir des données triées correspondantes ;
- Réception par chaque calculateur du module de gestion des postes opérateurs, de chaque groupe d'informations calculé et envoi à chaque poste opérateur, de chaque groupe d'informations reçu compris dans un sous-ensemble d'informations demandé par un opérateur ;
- Affichage du sous-ensemble d'informations demandé par chaque poste opérateur à l'instant courant ;
- Si l'opérateur fournit une consigne via l'interface graphique d'un poste opérateur, envoi de la consigne au module d'interface ;
- Envoi par le module d'interface d'au moins une commande dépendant des données reçues et/ou de la consigne à au moins un automate ;
chaque étape de réception par un calculateur du système comportant un échange d'au moins un message entre le calculateur et un autre calculateur du système comportant les sous-étapes suivantes :
- Envoi simultané sur la première voie et sur la deuxième voie du réseau de communication, du message par le calculateur vers le module de redondance ;
- Réception par le module de redondance, du message envoyé ;
- Si le message est reçu via la première voie et via la deuxième voie, effacement par le module de redondance du message reçu via la deuxième voie ;
- Modification par le module de redondance, du message reçu par ajout d'une demande d'acquittement ;
- Diffusion simultanée sur la première voie et sur la deuxième voie, du message modifié vers l'autre calculateur par le module de redondance ;
- Réception du message modifié par l'autre calculateur et envoi d'un acquittement au module de redondance.

Selon une variante de réalisation, le procédé selon l'invention comporte en outre les étapes suivantes réalisées par chaque calculateur du module d'instant courant:
- Réplication d'au moins une partie des données et des informations du module de traitement ;
- Envoi à chaque calculateur du module de gestion des postes opérateurs, des données et des informations répliquées correspondant à l'instant d'acquisition précédant immédiatement l'instant courant.

Selon une variante de réalisation compatible avec la variante de réalisation précédente, le procédé selon l'invention comporte en outre les étapes suivantes réalisées par chaque calculateur du module d'archivage :
- Réplication et archivage d'au moins une partie des données et des informations du module de traitement ;
- Envoi à chaque calculateur du module de gestion des postes opérateurs, des données et des informations archivées correspondant à chaque instant d'acquisition précédant l'instant d'acquisition précédant immédiatement l'instant courant.

Selon une variante de réalisation compatible avec les variantes de réalisation précédentes, chaque étape d'envoi par un calculateur du système comporte un échange d'au moins un message entre le calculateur et au moins un autre calculateur du système comportant les sous-étapes suivantes :
- Envoi simultané sur la première voie et la deuxième voie du réseau de communication, du message par le calculateur vers le module de redondance ;
- Réception par le module de redondance, du message envoyé ;
- Si le message est reçu via la première voie et via la deuxième voie, effacement par le module de redondance, du message reçu via la deuxième voie ;
- Modification par le module de redondance, du message reçu par ajout d'une demande d'acquittement ;
- Diffusion simultanée sur la première voie et la deuxième voie, du message modifié vers l'autre calculateur par le module de redondance ;
- Réception du message modifié par l'autre calculateur et envoi d'un acquittement au module de redondance.

Un troisième aspect de l'invention concerne un produit-programme d'ordinateur comprenant des instructions qui, quand le programme est exécuté sur un ordinateur, conduisent celui-ci à mettre en œuvre les étapes du procédé selon l'invention.

Selon une variante de réalisation, le produit-programme d'ordinateur selon l'invention est rédigé en langage ADA.

Ainsi, le produit-programme d'ordinateur est indépendant du matériel des calculateurs sur lesquels il est implémenté.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre une représentation schématique d'un système selon l'invention.
- La figure 2 est un schéma synoptique illustrant l'enchaînement des étapes d'un procédé selon l'invention.
- La figure 3 montre les données acquises et les informations calculées par le procédé selon l'invention en fonction du temps.
- La figure 4 est un schéma synoptique illustrant l'enchaînement des sous-étapes d'une étape du procédé selon l'invention comportant l'échange d'un message entre un calculateur et au moins un autre calculateur.
- La figure 5 montre une représentation schématique de l'échange d'un message entre un calculateur et au moins un autre calculateur.

### DESCRIPTION DETAILLEE

Sauf précision contraire, un même élément apparaissant sur des figures différentes présente une référence unique.

Un premier aspect de l'invention concerne un système à haute disponibilité permettant la conduite ou commande d'un processus industriel.

On entend par « commande d'un processus industriel », la méthode utilisée pour régir la marche du processus industriel.

Le processus industriel peut être un processus industriel critique, comme par exemple le processus de gestion de la fourniture d'énergie par un réseau électrique ou par une centrale de production d'énergie ou le processus de gestion de la fourniture d'eau par une usine de traitement des eaux, ou un processus industriel non critique, comme par exemple le processus de triage dans une gare de triage ou encore le processus automatique de fabrication d'un dispositif dans une usine.

On entend par « disponibilité », la propriété d'un système capable d'assurer ses fonctions sans interruption, délai ou dégradation, au moment même où la sollicitation en est faite.

Dans le contexte de l'invention, les fonctions assurées par le système à haute disponibilité sont liées à la commande d'un processus industriel.

On entend par « système à haute disponibilité », un système capable de répondre aux exigences de disponibilité sur une période ayant une durée supérieure à une dizaine d'années.

Pour obtenir un système à haute disponibilité, le système doit être entièrement redondant, c'est-à-dire disposés de dispositifs ou de fonctions supplémentaires destinés à permettre la reprise de l'exploitation en cas de défaillance ou d'indisponibilité de n'importe quel dispositif ou fonction principal.

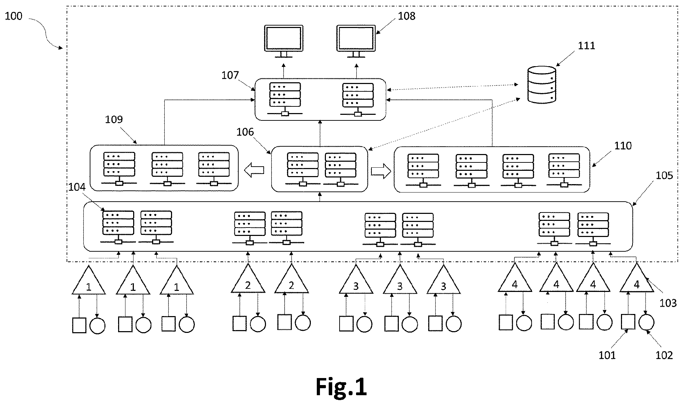

[Fig. 1] La figure 1 montre une représentation schématique du système 100 selon l'invention.

Le système 100 comporte :
- Une pluralité de postes opérateurs 108 comprenant une interface graphique ;
- Un module d'interface 105 ;
- Un module de traitement 106 comportant un couple de calculateurs 104 ;
- Un module de gestion des postes opérateurs 107 comportant un calculateur 104 par poste opérateur 108.

Le module d'interface 105 est configuré pour s'interfacer avec une pluralité d'automates 103 programmables industriels à haute disponibilité, présentant chacun un modèle d'automate. Le module d'interface 105 comporte au moins un couple de calculateurs 104 pour chaque modèle d'automate.

Sur la figure 1, le système 100 s'interface avec douze automates 103 représentés par des triangles, trois automates 103 présentant un modèle 1 d'automate, deux automates 103 présentant un modèle 2 d'automate, trois automates 103 présentant un modèle 3 d'automate et quatre automates 103 présentant un modèle 4 d'automate.

Sur la figure 1, le module d'interface 105 comporte un couple de calculateurs par modèle d'automate, c'est-à-dire un premier couple de calculateurs 104 s'interfaçant avec les automates 103 présentant le modèle 1 d'automate, un deuxième couple de calculateurs 104 s'interfaçant avec les automates 103 présentant le modèle 2 d'automate, un troisième couple de calculateurs 104 s'interfaçant avec les automates 103 présentant le modèle 3 d'automate et un quatrième couple de calculateurs 104 s'interfaçant avec les automates 103 présentant le modèle 4 d'automate.

Le module d'interface 105 pourrait comporter une pluralité de couples de calculateurs 104 par modèle d'automate.

Chaque automate 103 communique avec au moins un capteur 101 et au moins un actionneur 102.

Sur la figure 1, douze capteurs 101 représentés par des carrés et douze actionneurs 102 représentés par des cercles sont visibles et chaque automate 103 communique avec un capteur 101 et un actionneur 102.

Chaque automate 103 pourrait communiquer avec une pluralité de capteurs 101 et/ou une pluralité d'actionneurs 102.

Sur la figure 1, le système 100 comporte deux postes opérateurs 108 donc le module de gestion des postes opérateurs 107 comporte deux calculateurs 104.

Les calculateurs 104 du module d'interface 105 fonctionnent en redondance asynchrone, c'est-à-dire que chaque calculateur 104 d'un couple de calculateurs 104 réalise les mêmes tâches que l'autre calculateur 104 du couple de calculateurs 104 sans synchronisation entre eux et que chaque couple de calculateurs 104 réalise les mêmes tâches que les autres couple de calculateurs 104 sans synchronisation entre eux.

Le couple de calculateurs 104 du module de traitement 106 fonctionne en redondance active, c'est-à-dire que chaque calculateur 104 réalise les mêmes tâches que l'autre calculateur 104 en totale synchronisation mais seulement l'un des deux calculateurs 104 communique des résultats au reste du système 100.

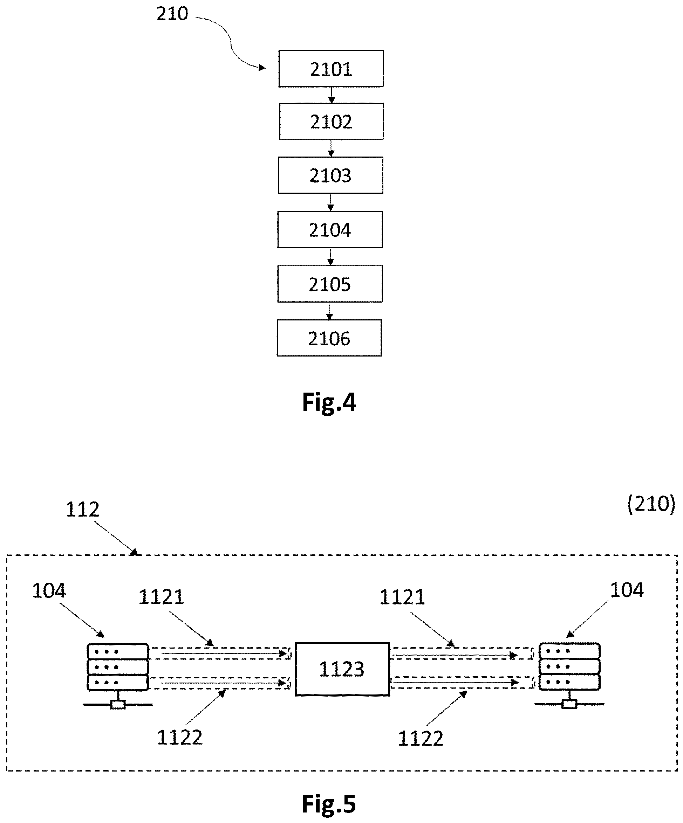

[Fig. 5] La figure 5 montre une représentation schématique du fonctionnement des communications entre calculateurs 104 au sein du système 100 selon l'invention.

Le système 100 comporte un réseau de communication 112 doublé présentant une première voie 1121 et une deuxième voie 1122 indépendantes l'une de l'autre et comprenant un module de redondance 1123, la redondance étant répartie sur les calculateurs 104 du système 100.

Le réseau de communication 112 est par exemple un réseau Ethernet doublé.

Le système 100 peut également comporter :
- Une base de données 111 répartie sur au moins une partie des calculateurs 104 ;
- Un module d'instant courant 109 comportant une pluralité de calculateurs 104 ;
- Un module d'archivage 110 comportant une pluralité de calculateurs 104.

Sur la figure 1, la base de données 111 est répartie sur les calculateurs 104 du module de traitement 106 et sur les calculateurs 104 du module de gestion des postes opérateurs 107 mais la base de données 111 pourrait également être répartie sur d'autres calculateurs 104, par exemple sur les calculateurs 104 du module d'interface 105.

La base de données 111 peut également être répartie sur l'ensemble des calculateurs 104 du système 100.

La base de données 111 peut également être répartie sur les calculateurs 104 du module d'instant courant 109 et/ou sur les calculateurs 104 du module d'archivage 110.

Les calculateurs 104 du module d'instant courant 109 fonctionnent en redondance fonctionnelle, c'est-à-dire que les tâches sont effectuées simultanément par chaque calculateur 104 du module d'instant courant 109.

Les calculateurs 104 du module d'archivage 110 fonctionnent en redondance fonctionnelle.

Sur la figure 1, le module d'instant courant 109 comporte trois calculateurs 104 mais il pourrait comporter n'importe quel autre nombre de calculateurs 104.

Sur la figure 1, le module d'archivage 110 comporte quatre calculateurs 104 mais il pourrait comporter n'importe quel autre nombre de calculateurs 104.

Le système 100 peut également comporter un poste d'administration non représenté sur les figures sur lequel est installé un système d'exploitation, et un module d'administration configuré pour gérer la liaison entre les calculateurs 104 du système 100 et le poste d'administration, c'est-à-dire pour faire l'interface entre le système 100 et le poste d'administration.

Le poste d'administration est distinct des postes opérateurs 108.

Un deuxième aspect de l'invention concerne un procédé de commande d'un processus industriel mis en œuvre par le système 100 selon l'invention.

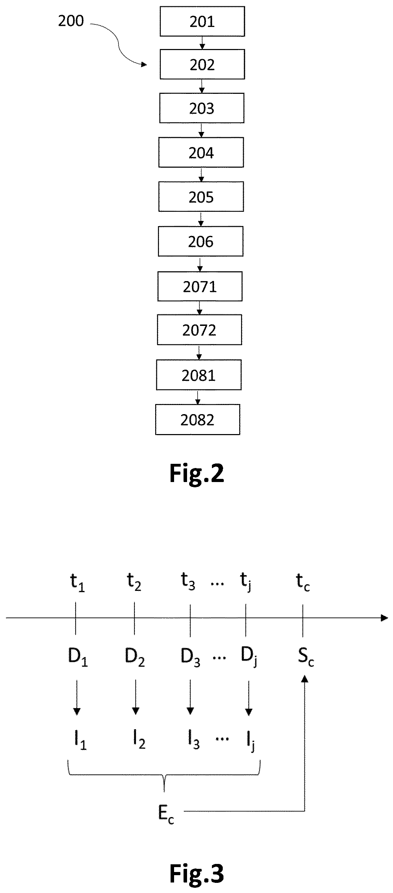

[Fig. 2] La figure 2 est un schéma synoptique illustrant l'enchaînement des étapes du procédé 200 selon l'invention.

Une première étape 201 du procédé 200 consiste, pour chaque calculateur 104 de chaque couple de calculateurs 104 du module d'interface 105, à collecter une pluralité de données de chaque automate 103 présentant un même modèle d'automate associé au couple de calculateurs 104 et à éliminer chaque donnée reçue en double, chaque donnée étant associé à un instant d'acquisition précédant un instant courant.

[Fig. 3] La figure 3 montre les données Dᵢ acquises en fonction du temps.

Sur la figure 3, au moins une première donnée D₁ est associée à un premier instant d'acquisition t₁, au moins une deuxième donnée D₂ est associée à un deuxième instant d'acquisition t₂, au moins une troisième donnée D₃ est associée à un troisième instant d'acquisition t₃ et au moins une j-ème donnée Dⱼ est associée à un j-ème instant d'acquisition ti, le j-ème instant d'acquisition tⱼ étant le dernier instant d'acquisition précédant l'instant courant t_{c}.

L'intervalle de temps entre deux instants d'acquisition successifs peut être fixe ou variable.

Par exemple, un premier automate 103 reçoit par exemple la première donnée D₁ et la troisième donnée D₃ et un deuxième automate 103 reçoit la deuxième donnée D₂ et la j-ème donnée Dⱼ. Si le premier automate 103 présente un premier modèle d'automate et que le deuxième automate 103 présente un deuxième modèle d'automate 103, un premier couple de calculateurs 104 du module d'interface 105 collecte la première donnée D₁ et la troisième donnée D₃ et un deuxième couple de calculateurs 104 du module d'interface 105 collecte la deuxième donnée D₂ et la j-ème donnée Dⱼ.

En prenant l'exemple de la figure 1, la première étape 201 consiste, pour le premier couple de calculateurs 104 du module d'interface 105 à collecter les données Dᵢ reçues par chaque automate 103 présentant le modèle 1 d'automate, pour le deuxième couple de calculateurs 104 du module d'interface 105 à collecter les données Dᵢ reçues par chaque automate 103 présentant le modèle 2 d'automate, pour le troisième couple de calculateurs 104 du module d'interface 105 à collecter les données Dᵢ reçues par chaque automate 103 présentant le modèle 3 d'automate et pour le quatrième couple de calculateurs 104 du module d'interface 105 à collecter les données Dᵢ reçues par chaque automate 103 présentant le modèle 4 d'automate.

Chaque calculateur 104 du module d'interface 105 collecte par exemple chaque donnée Dᵢ reçue par chaque automate 103 à un instant de collecte suivant immédiatement l'instant d'acquisition tᵢ, c'est-à-dire que la transmission des données Dᵢ est réalisée en temps réel entre chaque automate 103 et chaque calculateur 104 du module d'interface 105.

Une deuxième étape 202 du procédé 200 consiste, pour chaque calculateur 104 du module de traitement 106, à recevoir au moins une partie des données Dᵢ collectées par le module d'interface 105 à la première étape 201, c'est-à-dire à recevoir toutes les données Dᵢ collectées par le module d'interface 105 ou seulement une partie des données Dᵢ collectées par le module d'interface 105.

La partie des données Dᵢ correspond par exemple aux données Dᵢ collectées par chaque calculateur 104 du module d'interface 105 modifiées entre deux instants d'acquisition ti successifs.

En reprenant l'exemple précédent, chaque calculateur 104 du module de traitement 106 reçoit par exemple la première donnée D₁ et la troisième donnée D₃ du premier couple de calculateurs 104 et la deuxième donnée D₂ et la j-ème donnée Dⱼ du deuxième couple de calculateurs 104.

Chaque calculateur 104 du module de traitement 106 reçoit par exemple chaque donnée Dᵢ collecté à un instant de réception suivant immédiatement l'instant de collecte, c'est-à-dire que la transmission des données Dᵢ est réalisée en temps réel entre chaque calculateur 104 du module de traitement 106 et chaque calculateur 104 du module d'interface 105.

La deuxième étape 202 consiste ensuite, pour chaque calculateur 104 du module de traitement 106, à trier les données Dᵢ reçues en fonction de leur instant d'acquisition tᵢ, c'est-à-dire à ordonner temporellement les données Dᵢ reçues, puis à éliminer les données Dᵢ reçues en double.

En reprenant l'exemple précédent, chaque calculateur 104 du module de traitement 106 trie les données Dᵢ reçues dans l'ordre suivant : la première donnée D₁, la deuxième donnée D₂, la troisième donnée D₃ et la j-ème donnée Dⱼ.

La deuxième étape 202 consiste enfin, pour chaque calculateur 104 du module de traitement 106, à calculer pour chaque instant d'acquisition tᵢ, un groupe d'informations Iᵢ à partir des données Dᵢ triées correspondantes.

Chaque groupe d'information Iᵢ comporte au moins une information Iᵢ dépendant d'au moins une donnée Dᵢ acquise à l'instant d'acquisition ti. Par exemple, une information Iᵢ peut dépendre d'une donnée acquise à l'instant d'acquisition tᵢ et de la même donnée acquise à l'instant d'acquisition tᵢ₋₁ précédant immédiatement l'instant d'acquisition ti.

En prenant l'exemple de la figure 3, la deuxième étape 202 consiste à calculer un premier groupe d'informations I₁ pour le premier instant d'acquisition t₁, un deuxième groupe d'informations I₂ pour le deuxième instant d'acquisition t₂, un troisième groupe d'informations I₃ pour le troisième instant d'acquisition t₃ et un j-ème groupe d'informations Iⱼ pour le j-ème instant d'acquisition tⱼ.

Une troisième étape 203 du procédé 200 consiste, pour chaque calculateur 104 du module de gestion des postes opérateurs 107, à recevoir chaque groupe d'informations Iᵢ calculé à la deuxième étape 202.

En prenant l'exemple de la figure 3, la troisième étape 203 consiste pour chaque calculateur 104 du module de gestion des postes opérateurs 107, à recevoir le premier groupe d'informations I1, le deuxième groupe d'informations I2, le troisième groupe d'informations I₃ et le j-ème groupe d'informations Iⱼ.

Chaque calculateur 104 du module de gestion des postes opérateurs 107 reçoit par exemple chaque groupe d'informations Iᵢ calculé à un instant de réception suivant immédiatement un instant de calcul du groupe d'informations Iᵢ, c'est-à-dire que la transmission des groupes d'informations Iᵢ est réalisée en temps réel entre chaque calculateur 104 du module de traitement 106 et chaque calculateur 104 du module de gestion des postes opérateurs 107.

La troisième étape 203 du procédé 200 consiste ensuite, pour chaque calculateur 104 du module de gestion des postes opérateurs 107 à envoyer au poste opérateur 108 correspondant, chaque groupe d'informations Iᵢ reçu compris dans un sous-ensemble d'informations S_{c} demandé par un opérateur.

Le sous-ensemble d'informations S_{c} comprend au moins une partie des informations Iᵢ comprises dans un ensemble d'informations E_{c} comprenant chaque groupe d'informations Iᵢ calculé.

Chaque calculateur 104 du module de gestion des postes opérateurs 107 envoie par exemple chaque groupe d'informations Iᵢ à un instant d'envoi suivant immédiatement l'instant de réception du groupe d'informations Iᵢ, c'est-à-dire que la transmission des groupes d'informations Iᵢ est réalisée en temps réel entre chaque calculateur 104 du module de gestion des postes opérateurs 107 et chaque poste opérateur 108.

Une quatrième étape 204 du procédé 200 consiste, pour chaque poste opérateur 108, à afficher le sous-ensemble d'informations S_{c} demandé à l'instant courant t_{c}.

Chaque poste opérateur 108 du système 100 fournit les mêmes informations Iᵢ à l'opérateur.

Une cinquième étape 205 du procédé 200 est réalisée si l'opérateur fournit une consigne via l'interface graphique d'un poste opérateur 108 donné. La cinquième étape 205 consiste, pour le poste opérateur 108 donné, à envoyer la consigne reçue au module d'interface 105.

Une sixième étape 206 du procédé 200 consiste, pour le module d'interface 105, à envoyer au moins une commande dépendant des données Dᵢ reçues à la première étape 201 et/ou de la consigne reçue à la cinquième étape 205 à au moins un automate 103.

L'automate 103 peut alors envoyer la commande à au moins un actionneur 102 correspondant.

La commande peut donc dépendre des informations Iᵢ calculées à partir des données Dᵢ reçues.

Par exemple, si le module d'interface 105 reçoit à la cinquième étape 205 une consigne demandant d'éteindre un actionneur 102 i, la sixième étape 206 consiste pour le module d'interface 105, à envoyer une commande à l'automate 103 j configuré pour envoyer des commandes à l'actionneur 102 i.

Dans le cas où le système 100 comporte le module d'instant courant 109, le procédé 200 comporte une septième étape 2071 et une huitième étape 2072 réalisées par chaque calculateur 104 du module d'instant courant 109.

La septième étape 2071 consiste à répliquer au moins une partie des données Dᵢ et des informations Iᵢ du module de traitement 105, c'est-à-dire une partie des données Dᵢ et des informations Iᵢ du module de traitement 105 ou l'ensemble des données Dᵢ et des informations Iᵢ du module de traitement 105.

La partie des données Dᵢ et des informations Iᵢ du module de traitement 105 répliquée comporte par exemple les données Dᵢ et les informations Iᵢ relatives à l'instant d'acquisition tⱼ précédant immédiatement l'instant courant t_{c}.

On entend par « réplication », le partage d'informations pour assurer la cohérence de données entre plusieurs sources de données redondantes.

La huitième étape 2072 consiste à envoyer à chaque calculateur 104 du module de gestion des postes opérateurs 107, les données Dᵢ et les informations Iᵢ répliquées à la septième étape 2071 relatives à l'instant d'acquisition tⱼ précédant immédiatement l'instant courant t_{c}.

Sur la figure 3, l'instant d'acquisition ti précédant immédiatement l'instant courant t_{c} est le j-ème instant d'acquisition tⱼ.

Dans le cas où le système 100 comporte le module d'archivage 110, le procédé 200 comporte une neuvième étape 2081 et une dixième étape 2082 réalisées par chaque calculateur 104 du module d'archivage 110.

La neuvième étape 2081 consiste à répliquer et à archiver une partie des données Dᵢ et des informations Iᵢ du module de traitement 105, c'est-à-dire une partie des données Dᵢ et des informations Iᵢ du module de traitement 105 ou l'ensemble des données Dᵢ et des informations Iᵢ du module de traitement 105.

La partie des données Dᵢ et des informations Iᵢ du module de traitement 105 archivée comporte par exemple les données Dᵢ et les informations Iᵢ relatives à chaque instant d'acquisition ti précédant l'instant d'acquisition tⱼ précédant immédiatement l'instant courant t_{c}.

La dixième étape 2082 consiste à envoyer à chaque calculateur 104 du module de gestion des postes opérateurs 107, les données Dᵢ et les informations Iᵢ archivées à la neuvième étape 2081 relatives à chaque instant d'acquisition ti précédant l'instant d'acquisition tⱼ précédant immédiatement l'instant courant t_{c}.

Sur la figure 3, l'instant d'acquisition ti précédant immédiatement l'instant courant t_{c} est le j-ème instant d'acquisition tⱼ donc la dixième étape 2082 consiste à envoyer les données Dᵢ et les informations Iᵢ relatives au premier instant d'acquisition t₁, au deuxième instant d'acquisition t₂, au troisième instant d'acquisition t₃ et de manière générale à tous les autres instants d'acquisition ti précédant le j-ème instant d'acquisition tⱼ.

Dans le procédé 200, chaque étape de réception par un calculateur 104, c'est-à-dire la deuxième étape 202 et la troisième étape 203, et chaque étape d'envoi par un calculateur 104, c'est-à-dire la huitième étape 2072 et la dixième étape 2082, comporte un échange d'au moins un message entre un calculateur 104 expéditeur et au moins un autre calculateur 104 destinataire.

[Fig. 4] La figure 4 est un schéma synoptique illustrant l'enchaînement des sous-étapes d'un échange 210.

Une première sous-étape 2101 de l'échange 210 consiste pour le calculateur 104 expéditeur, à envoyer le message simultanément sur la première voie 1121 et la deuxième voie 1122 du réseau de communication 112 à destination du module de redondance 1123.

Une deuxième sous-étape 2102 de l'échange 210 consiste pour le module de redondance 1123, à recevoir le message envoyé.

Si à la deuxième sous-étape 2102, le module de redondance 1123 reçoit le message via la première voie 1121 et via la deuxième voie 1122, et donc reçoit le message en double, une troisième sous-étape 2103 de l'échange 210 consiste pour le module de redondance 1123, à effacer le message reçu via la deuxième voie 1122.

Une quatrième sous-étape 2104 de l'échange 210 consiste pour le module de redondance 1123, à modifier le message reçu par ajout d'une demande d'acquittement.

Une cinquième sous-étape 2105 de l'échange 210 consiste pour le module de redondance 1123, à diffuser le message modifié simultanément sur la première voie 1121 et la deuxième voie 1122 du réseau de communication 112 à destination du ou des calculateurs 104 destinataires.

Une sixième sous-étape 2106 de l'échange 210 consiste pour chaque calculateur 104 destinataire, à recevoir le message modifié et à envoyer un acquittement au module de redondance 1123.

La base de données 111 est configurée pour stocker et gérer les données Dᵢ et les informations Iᵢ utilisées par les calculateurs 104 sur laquelle elle est répartie.

## Revendications

1. Système (100) de commande à haute disponibilité d'un processus industriel comprenant :
- Une pluralité de postes opérateurs (108) comprenant une interface graphique configurée pour :
o recevoir des consignes d'un opérateur via l'interface graphique ;
o afficher à un instant courant (t_{c}) et sur demande de l'opérateur, un sous-ensemble d'informations (S_{c}) d'un ensemble d'informations (E_{c}) relatives au processus industriel, l'ensemble d'informations (E_{c}) comprenant un groupe d'informations (Iᵢ) pour chaque instant d'acquisition (ti) d'une pluralité d'instants d'acquisition (ti) précédant l'instant courant (t_{c}) ;
- Un module d'interface (105) configuré pour collecter d'une pluralité d'automates (103) programmables industriels présentant chacun un modèle d'automate, des données (Dᵢ), chaque donnée (Dᵢ) étant associée à un instant d'acquisition (ti) de la pluralité d'instants d'acquisition (ti), le module d'interface (105) comportant au moins un couple de calculateurs (104) pour chaque modèle d'automate, chaque calculateur (104) du couple de calculateurs (104) étant configuré pour :
o collecter chaque donnée (Dᵢ) reçue par chaque automate (103) présentant le modèle d'automate et éliminer chaque donnée (Dᵢ) reçue en double ;
o envoyer à au moins un automate (103), au moins une commande dépendant des données (Dᵢ) collectées et/ou de consignes fournies par l'opérateur ;
les calculateurs (104) du module d'interface (105) fonctionnant en redondance asynchrone ;
- Un module de traitement (106) comportant un couple de calculateurs (104), chaque calculateur (104) du couple de calculateurs (104) étant configuré pour :
o recevoir de chaque calculateur (104) du module d'interface (105), au moins une partie des données (Dᵢ) collectées ;
o trier les données (Dᵢ) reçues en fonction de leur instant d'acquisition (tᵢ) et éliminer les données (Dᵢ) reçues en double ;
o calculer pour chaque instant d'acquisition (tᵢ), le groupe d'informations (Iᵢ) correspondant à partir des données (Dᵢ) triées correspondantes ;
les calculateurs (104) du module de traitement (106) fonctionnant en redondance active ;
- Un module de gestion des postes opérateurs (107) comportant un calculateur (104) pour chaque poste opérateur (108), chaque calculateur (104) étant configuré pour :
∘ recevoir chaque groupe d'informations (Iᵢ) calculé ;
∘ envoyer au poste opérateur (108) correspondant, chaque groupe d'informations (Iᵢ) correspondant au sous-ensemble d'informations (S_{c}) demandé ;
∘ gérer l'interface graphique du poste opérateur (108) correspondant ;
- Un réseau de communication (112) doublé présentant une première voie (1121) et une deuxième voie (1122) distinctes, comprenant un module de redondance (1123), chaque calculateur (104) du système (100) étant configuré pour :
∘ envoyer au module de redondance (1123), chaque message destiné à au moins un autre calculateur (104) du système (100), simultanément sur la première voie (1121) et la deuxième voie (1122) ;
∘ recevoir chaque message qui lui est destiné du module de redondance (1123) et envoyer un acquittement au module de redondance (1123) ;
le module de redondance (1123) étant configuré pour :
v recevoir le message envoyé via la première voie (1121) et via la deuxième voie (1122) ;
∘ effacer le message reçu via la deuxième voie (1122) si le message a été reçu via la première voie (1121) ;
∘ modifier le message reçu en ajoutant une demande d'acquittement ;
∘ diffuser vers l'autre calculateur (104) du système (100), le message modifié, simultanément sur la première voie (1121) et la deuxième voie (1122).

2. Système (100) selon la revendication 1, **caractérisé en ce qu'**il comporte en outre une base de données (111) répartie sur au moins une partie des calculateurs (104) du système (100), configurée pour stocker et gérer les données (Dᵢ) et les informations (Iᵢ).

3. Système (100) selon l'une quelconque des revendications précédentes, **caractérisé en ce qu'**il comporte en outre un module d'instant courant (109) comportant une pluralité de calculateurs (104), chaque calculateur (104) du module d'instant courant (109) étant configuré pour :
- répliquer au moins une partie des données (Dᵢ) et des informations (Iᵢ) du module de traitement (106) ;
- fournir au module de gestion des postes opérateurs (107), les données (Dᵢ) et les informations (Iᵢ) répliquées correspondant à l'instant d'acquisition (tⱼ) précédant immédiatement l'instant courant (t_{c}) ;
les calculateurs (104) du module d'instant courant (109) fonctionnant en redondance fonctionnelle.

4. Système (100) selon l'une quelconque des revendications précédentes, **caractérisé en ce qu'**il comporte en outre un module d'archivage (110) comportant une pluralité de calculateurs (104), chaque calculateur (104) du module d'archivage (110) étant configuré pour :
- répliquer et archiver une partie des données (Dᵢ) et des informations (Iᵢ) du module de traitement (106) ;
- fournir au module de gestion des postes opérateurs (107), les données (Dᵢ) et les informations (Iᵢ) archivées correspondant à chaque instant d'acquisition (tᵢ) précédant l'instant d'acquisition (tⱼ) précédant immédiatement l'instant courant (t_{c}) ;
les calculateurs (104) du module d'archivage (110) fonctionnant en redondance fonctionnelle.

5. Système (100) selon l'une quelconque des revendications précédentes, **caractérisé en ce que** la partie des données (Dᵢ) collectées reçue par chaque calculateur (104) du module de traitement (106) correspond aux données (Dᵢ) collectées par chaque calculateur (104) du module d'interface (105) modifiées entre deux instants d'acquisition (tᵢ) successifs.

6. Procédé (200) de commande d'un processus industriel mis en œuvre par le système (100) selon l'une quelconque des revendications précédentes, comprenant les étapes suivantes :
- Pour chaque calculateur (104) de chaque couple de calculateurs (104) du module d'interface (105), collecte de chaque donnée (Dᵢ) reçue par chaque automate (103) présentant un modèle d'automate correspondant et élimination de chaque donnée (Dᵢ) reçue en double, chaque donnée (Dᵢ) étant associée à un instant d'acquisition (tᵢ) précédant un instant courant (t_{c}, 201) ;
- Réception par chaque calculateur (104) du module de traitement (106), d'au moins une partie des données (Dᵢ) collectées par le module d'interface (105), tri des données (Dᵢ) reçues en fonction de leur instant d'acquisition (tᵢ), élimination des données (Dᵢ) reçues en double et calcul d'un groupe d'informations (Iᵢ) pour chaque instant d'acquisition (tᵢ) à partir des données (Dᵢ) triées correspondantes (202) ;
- Réception par chaque calculateur (104) du module de gestion des postes opérateurs (107), de chaque groupe d'informations (Iᵢ) calculé et envoi à chaque poste opérateur (108), de chaque groupe d'informations (Iᵢ) reçu compris dans un sous-ensemble d'informations (S_{c}) demandé par un opérateur (203) ;
- Affichage du sous-ensemble d'informations (S_{c}) demandé par chaque poste opérateur (108) à l'instant courant (t_{c}, 204) ;
- Si l'opérateur fournit une consigne via l'interface graphique d'un poste opérateur (108), envoi de la consigne au module d'interface (105, 205) ;
- Envoi par le module d'interface (105) d'au moins une commande dépendant des données (Dᵢ) reçues et/ou de la consigne à au moins un automate (103, 206) ;
chaque étape de réception (202, 203) par un calculateur (104) du système (100) comportant un échange (210) d'au moins un message entre le calculateur (104) et un autre calculateur (104) du système (100) comportant les sous-étapes suivantes :
- Envoi simultané sur la première voie (1121) et la deuxième voie (1122) du réseau de communication (112), du message par l'autre calculateur (104) vers le module de redondance (1123, 2101) ;
- Réception par le module de redondance (1123), du message envoyé (2102) ;
- Si le message est reçu via la première voie (1121) et via la deuxième voie (1122), effacement par le module de redondance (1123), du message reçu via la deuxième voie (1122, 2103) ;
- Modification par le module de redondance (1123), du message reçu par ajout d'une demande d'acquittement (2104) ;
- Diffusion simultanée sur la première voie (1121) et la deuxième voie (1122), du message modifié vers le calculateur (104) par le module de redondance (1123, 2105) ;
- Réception du message modifié par le calculateur (104) et envoi d'un acquittement au module de redondance (1123, 2106).

7. Procédé (200) selon la revendication 6 mis en œuvre par le système (100) comportant le module d'instant courant (109), **caractérisé en ce qu'**il comporte en outre les étapes suivantes réalisées par chaque calculateur (104) du module d'instant courant (109) :
- Réplication d'au moins une partie des données (Dᵢ) et des informations (Iᵢ) du module de traitement (105, 2071) ;
- Envoi à chaque calculateur (104) du module de gestion des postes opérateurs (107), des données (Dᵢ) et des informations (Iᵢ) répliquées correspondant à l'instant d'acquisition (tⱼ) précédant immédiatement l'instant courant (t_{c}, 2072).

8. Procédé (200) selon l'une quelconque des revendications 6 ou 7 mis en œuvre par le système (100) comportant le module d'archivage (110), **caractérisé en ce qu'**il comporte en outre les étapes suivantes réalisées par chaque calculateur (104) du module d'archivage (110) :
- Réplication et archivage d'au moins une partie des données (Dᵢ) et des informations (Iᵢ) du module de traitement (105, 2081) ;
- Envoi à chaque calculateur (104) du module de gestion des postes opérateurs (107), des données (Dᵢ) et des informations (Iᵢ) archivées correspondant à chaque instant d'acquisition (tᵢ) précédant l'instant d'acquisition (tⱼ) précédant immédiatement l'instant courant (t_{c}, 2082).

9. Procédé (200) selon la revendication 7 ou 8, **caractérisé en ce que** chaque étape d'envoi (2072, 2082) par un calculateur (104) du système (100) comporte un échange (210) d'au moins un message entre le calculateur (104) et au moins un autre calculateur (104) du système (100) comportant les sous-étapes suivantes :
- Envoi simultané sur la première voie (1121) et la deuxième voie (1122) du réseau de communication (112), du message par le calculateur (104) vers le module de redondance (1123, 2101) ;
- Réception par le module de redondance (1123), du message envoyé (2102) :
- Si le message est reçu via la première voie (1121) et via la deuxième voie (1122), effacement par le module de redondance (1123), du message reçu via la deuxième voie (1122, 2103) ;
- Modification par le module de redondance (1123), du message reçu par ajout d'une demande d'acquittement (2104) ;
- Diffusion simultanée sur la première voie (1121) et la deuxième voie (1122), du message modifié vers l'autre calculateur (104) par le module de redondance (1123, 2105) ;
- Réception du message modifié par l'autre calculateur (104) et envoi d'un acquittement au module de redondance (1123, 2106).

10. Produit-programme d'ordinateur comprenant des instructions qui, quand le programme est exécuté sur les calculateurs (104) d'un système selon l'une quelconque des revendications 1 à 5, conduisent ceux-ci à mettre en œuvre les étapes du procédé (200) selon l'une quelconque des revendications 6 à 9.

11. Produit-programme d'ordinateur selon la revendication 10, **caractérisé en ce qu'**il est rédigé en langage ADA.

## Patentansprüche

1. System (100) zur Hochverfügbarkeitssteuerung eines industriellen Prozesses, umfassend:
- Eine Vielzahl von Bedienerplätzen (108) mit einer grafischen Schnittstelle, die dazu eingerichtet ist:
∘Anweisungen von einem Bediener über die grafische Schnittstelle zu empfangen;
∘ zu einem aktuellen Zeitpunkt (t_{c}) und auf Anforderung des Bedieners eine Untergruppe von Informationen (S_{c}) einer Gruppe von Informationen (E_{c}) bezüglich des industriellen Prozesses anzuzeigen, wobei die Gruppe von Informationen (E_{c}) eine Gruppe von Informationen (Iᵢ) für jeden Erfassungszeitpunkt (tᵢ) einer Vielzahl von Erfassungszeitpunkten (tᵢ) vor dem aktuellen Zeitpunkt (t_{c}) umfasst;
- Ein Schnittstellenmodul (105), das dazu eingerichtet ist, von einer Vielzahl von programmierbaren industriellen Automaten (103), die jeweils ein Automatenmodell aufweisen, Daten (Dᵢ) zu sammeln, wobei die Daten (Dᵢ) jeweils einem Erfassungszeitpunkt (tᵢ) der Vielzahl von Erfassungszeitpunkten (tᵢ) zugeordnet sind, wobei das Schnittstellenmodul (105) mindestens ein Paar von Rechnern (104) für jedes Automatenmodell aufweist, wobei jeder Rechner (104) des Paars von Rechnern (104) dazu eingerichtet ist:
∘ alle Daten (Dᵢ) zu sammeln, die von jedem Automaten (103) empfangen werden, der das Automatenmodell aufweist, und alle doppelt empfangenen Daten (Dᵢ) zu eliminieren;
∘ an mindestens einen Automaten (103) mindestens einen Befehl zu senden, der von den gesammelten Daten (Dᵢ) und/oder den vom Bediener bereitgestellten Anweisungen abhängt;
wobei die Rechner (104) des Schnittstellenmoduls (105) in asynchroner Redundanz arbeiten;
- Ein Verarbeitungsmodul (106) mit einem Paar von Rechnern (104), wobei jeder Rechner (104) des Paars von Rechnern (104) dazu eingerichtet ist:
∘ von jedem Rechner (104) des Schnittstellenmoduls (105) mindestens einen Teil der gesammelten Daten (Dᵢ) zu empfangen;
∘ die empfangenen Daten (Dᵢ) nach ihrem Erfassungszeitpunkt (tᵢ) zu sortieren und die doppelt empfangenen Daten (Dᵢ) zu eliminieren;
∘ für jeden Erfassungszeitpunkt (tᵢ) die entsprechende Gruppe von Informationen (Iᵢ) aus den entsprechenden sortierten Daten (Dᵢ) zu berechnen;
wobei die Rechner (104) des Verarbeitungsmoduls (106) in aktiver Redundanz arbeiten;
- Ein Bedienerplatzverwaltungsmodul (107) mit einem Rechner (104) für jeden Bedienerplatz (108), wobei jeder Rechner (104) dazu eingerichtet ist:
∘ jede berechnete Gruppe von Informationen (Iᵢ) zu empfangen;
∘ jede Gruppe von Informationen (Iᵢ), die der angeforderten Untergruppe von Informationen (S_{c}) entspricht, an den entsprechenden Bedienerplatz (108) zu senden;
∘ die grafische Schnittstelle des entsprechenden Bedienerplatzes (108) zu verwalten;
- Ein doppeltes Kommunikationsnetzwerk (112) aufweisend einen ersten (1121) und einen zweiten (1122) separaten Kanal, umfassend ein Redundanzmodul (1123), wobei jeder Rechner (104) des Systems (100) dazu eingerichtet ist:
∘jede Nachricht, die für mindestens einen anderen Rechner (104) des Systems (100) bestimmt ist, gleichzeitig über den ersten Kanal (1121) und den zweiten Kanal (1122) an das Redundanzmodul (1123) zu senden;
∘ jede an dies gerichtete Nachricht vom Redundanzmodul (1123) zu empfangen und eine Bestätigung an das Redundanzmodul (1123) zu senden;
wobei das Redundanzmodul (1123) dazu eingerichtet ist:
∘ die über den ersten Kanal (1121) und über den zweiten Kanal (1122) gesendete Nachricht zu empfangen;
∘ die über den zweiten Kanal (1122) empfangene Nachricht zu löschen, wenn die Nachricht über den ersten Kanal (1121) empfangen wurde;
∘ die empfangene Nachricht durch Hinzufügen einer Bestätigungsanforderung zu ändern;
∘ an den weiteren Rechner (104) des Systems (100) die geänderte Nachricht gleichzeitig auf dem ersten Kanal (1121) und dem zweiten Kanal (1122) zu übertragen.

2. System (100) nach Anspruch 1, **dadurch gekennzeichnet, dass** es ferner eine Datenbank (111) aufweist, die auf mindestens einen Teil der Rechner (104) des Systems (100) verteilt ist und dazu eingerichtet ist, die Daten (Dᵢ) und Informationen (Iᵢ) zu speichern und zu verwalten.

3. System (100) nach einem der vorstehenden Ansprüche,
**dadurch gekennzeichnet, dass** es ferner ein Echtzeitmodul (109) mit einer Vielzahl von Rechnern (104) aufweist, wobei jeder Rechner (104) des Echtzeitmoduls (109) dazu eingerichtet ist:
- mindestens einen Teil der Daten (Dᵢ) und Informationen (Iᵢ) des Verarbeitungsmoduls (106) zu replizieren;
- dem Bedienerplatzverwaltungsmodul (107) die replizierten Daten (Dᵢ) und Informationen (Iᵢ) bereitzustellen, die dem unmittelbar vor dem aktuellen Zeitpunkt (t_{c}) liegenden Erfassungszeitpunkt (tᵢ) entsprechen;
wobei die Rechner (104) des Echtzeitmoduls (109) in funktionaler Redundanz arbeiten.

4. System (100) nach einem der vorstehenden Ansprüche,
**dadurch gekennzeichnet, dass** es ferner ein Archivierungsmodul (110) mit einer Vielzahl von Rechnern (104) aufweist, wobei jeder Rechner (104) des Archivierungsmoduls (110) dazu eingerichtet ist:
- einen Teil der Daten (Dᵢ) und Informationen (Iᵢ) des Verarbeitungsmoduls (106) zu replizieren und zu archivieren;
- dem Bedienerplatzverwaltungsmodul (107) die archivierten Daten (Dᵢ) und Informationen (Iᵢ) bereitzustellen, die jedem Erfassungszeitpunkt (tᵢ) vor dem Erfassungszeitpunkt (tⱼ) unmittelbar vor dem aktuellen Zeitpunkt (t_{c}) entsprechen;
wobei die Rechner (104) des Archivierungsmoduls (110) in funktionaler Redundanz arbeiten.

5. System (100) nach einem der vorstehenden Ansprüche,
**dadurch gekennzeichnet, dass** der Teil der gesammelten Daten (Dᵢ), der von jedem Rechner (104) des Verarbeitungsmoduls (106) empfangen wird, den Daten (Dᵢ) entspricht, die von jedem Rechner (104) des Schnittstellenmoduls (105) gesammelt und zwischen zwei aufeinanderfolgenden Erfassungszeitpunkten (tᵢ) geändert wurden.

6. Verfahren (200) zum Steuern eines industriellen Prozesses, der durch das System (100) nach einem der vorstehenden Ansprüche durchgeführt wird, umfassend die folgenden Schritte:
- Für jeden Rechner (104) jedes Paars von Rechnern (104) des Schnittstellenmoduls (105), Sammeln aller Daten (Dᵢ), die von jedem Automaten (103) mit einem entsprechenden Automatenmodell empfangen werden, und Eliminieren aller doppelt empfangenen Daten (Dᵢ), wobei die Daten (Dᵢ) jeweils einem Erfassungszeitpunkt (tᵢ) zugeordnet sind, der einem aktuellen Zeitpunkt (t_{c}, 201) vorausgeht;
- Empfangen durch jeden Rechner (104) des Verarbeitungsmoduls (106), mindestens eines Teils der durch das Schnittstellenmodul (105) gesammelten Daten (Dᵢ), Sortieren der empfangenen Daten (Dᵢ) in Abhängigkeit von ihrem Erfassungszeitpunkt (tᵢ), Eliminieren der doppelt empfangenen Daten (Dᵢ) und Berechnen einer Gruppe von Informationen (Iᵢ) für jeden Erfassungszeitpunkt (tᵢ) aus den entsprechenden sortierten Daten (Dᵢ) (202);
- Empfangen jeder berechneten Gruppe von Informationen (Iᵢ) durch jeden Rechner (104) des Bedienerplatzverwaltungsmoduls (107) und Senden jeder empfangenen Gruppe von Informationen (Iᵢ), die in einer von einem Bediener (203) angeforderten Untergruppe von Informationen (S_{c}) umfasst ist, an jeden Bedienerplatz (108);
- Anzeigen der Untergruppe von Informationen (S_{c}), die von jedem Bedienerplatz (108) zum aktuellen Zeitpunkt (t_{c}, 204) angefordert werden;
- Wenn der Bediener über die grafische Schnittstelle eines Bedienerplatzes (108) eine Anweisung gibt, Senden dieser Anweisung an das Schnittstellenmodul (105, 205);
- Senden mindestens eines Befehls durch das Schnittstellenmodul (105) in Abhängigkeit von den empfangenen Daten (Dᵢ) und/oder der Anweisung an mindestens einen Automaten (103, 206);
wobei jeder Schritt des Empfangens (202, 203) durch einen Rechner (104) des Systems (100) einen Austausch (210) mindestens einer Nachricht zwischen dem Rechner (104) und einem weiteren Rechner (104) des Systems (100) mit den folgenden Teilschritten umfasst:
- Gleichzeitiges Senden der Nachricht durch den weiteren Rechner (104) an das Redundanzmodul (1123, 2101) über den ersten Kanal (1121) und den zweiten Kanal (1122) des Kommunikationsnetzes (112);
- Empfangen der gesendeten Nachricht (2102) durch das Redundanzmodul (1123);
- Wenn die Nachricht über den ersten Kanal (1121) und über den zweiten Kanal (1122) empfangen wird, Löschen der über den zweiten Kanal (1122, 2103) empfangenen Nachricht durch das Redundanzmodul (1123);
- Ändern der empfangenen Nachricht durch das Redundanzmodul (1123) durch Hinzufügen einer Bestätigungsanforderung (2104);
- Gleichzeitiges Übertragen der vom Redundanzmodul (1123, 2105) geänderten Nachricht über den ersten Kanal (1121) und den zweiten Kanal (1122) an den Rechner (104);
- Empfangen der vom Rechner (104) geänderten Nachricht und Senden einer Bestätigung an das Redundanzmodul (1123, 2106).

7. Verfahren (200) nach Anspruch 6, das von dem System (100) mit dem Echtzeitmodul (109) ausgeführt wird, **dadurch gekennzeichnet, dass** es ferner die folgenden Schritte aufweist, die von jedem Rechner (104) des Echtzeitmoduls (109) ausgeführt werden:
- Replizieren mindestens eines Teils der Daten (Dᵢ) und Informationen (Iᵢ) des Verarbeitungsmoduls (105, 2071);
- Senden der replizierten Daten (Dᵢ) und Informationen (Iᵢ), die dem unmittelbar vor dem aktuellen Zeitpunkt (t_{c}, 2072) liegenden Erfassungszeitpunkt (tⱼ) entsprechen, an jeden Rechner (104) des Bedienerplatzverwaltungsmoduls (107).

8. Verfahren (200) nach einem der Ansprüche 6 oder 7, das von dem System (100) mit dem Archivierungsmodul (110) durchgeführt wird,
**dadurch gekennzeichnet, dass** es ferner die folgenden Schritte aufweist, die von jedem Rechner (104) des Archivierungsmoduls (110) ausgeführt werden:
- Replizieren und Archivieren mindestens eines Teils der Daten (Dᵢ) und Informationen (Iᵢ) des Verarbeitungsmoduls (105, 2081);
- Senden der archivierten Daten (Dᵢ) und Informationen (Iᵢ), die jedem Erfassungszeitpunkt (tᵢ) vor dem Erfassungszeitpunkt (tⱼ) unmittelbar vor dem aktuellen Zeitpunkt (t_{c}, 2082) entsprechen, an jeden Rechner (104) des Bedienerplatzverwaltungsmoduls (107).

9. Verfahren (200) nach Anspruch 7 oder 8, **dadurch gekennzeichnet, dass** jeder Schritt des Sendens (2072, 2082) durch einen Rechner (104) des Systems (100) einen Austausch (210) mindestens einer Nachricht zwischen dem Rechner (104) und mindestens einem weiteren Rechner (104) des Systems (100) mit den folgenden Teilschritten aufweist:
- Gleichzeitiges Senden der Nachricht durch den Rechner (104) an das Redundanzmodul (1123, 2101) über den ersten Kanal (1121) und den zweiten Kanal (1122) des Kommunikationsnetzes (112);
- Empfangen der gesendeten Nachricht (2102) durch das Redundanzmodul (1123):
- Wenn die Nachricht über den ersten Kanal (1121) und über den zweiten Kanal (1122) empfangen wird, Löschen der über den zweiten Kanal (1122, 2103) empfangenen Nachricht durch das Redundanzmodul (1123);
- Ändern der empfangenen Nachricht durch das Redundanzmodul (1123) durch Hinzufügen einer Bestätigungsanforderung (2104);
- Gleichzeitiges Übertragen der vom Redundanzmodul (1123, 2105) geänderten Nachricht über den ersten Kanal (1121) und den zweiten Kanal (1122) an den weiteren Rechner (104);
- Empfangen der vom weiteren Rechner (104) geänderten Nachricht und Senden einer Bestätigung an das Redundanzmodul (1123, 2106).

10. Computerprogrammprodukt umfassend Befehle, die, wenn das Programm auf den Rechnern (104) eines Systems nach einem der Ansprüche 1 bis 5 ausgeführt wird, diese dazu veranlassen, die Schritte des Verfahrens (200) nach einem der Ansprüche 6 bis 9 durchzuführen.

11. Computerprogrammprodukt nach Anspruch 10,
**dadurch gekennzeichnet, dass** es in der Sprache ADA verfasst ist.

## Claims

1. System (100) for high-availability control of an industrial process, comprising:
- A plurality of operator stations (108) comprising a graphical interface which is configured to:
∘ receive instructions from an operator via the graphical interface;
∘ display at a current time (t_{c}) and on request from the operator, a subset (S_{c}) of information from a set (E_{c}) of information relating to the industrial process, the set (E_{c}) of information comprising a group (Iᵢ) of information for each acquisition time (tᵢ) from a plurality of acquisition times (tᵢ) preceding the current time (t_{c});
- An interface module (105) configured to collect data (Dᵢ) from a plurality of programmable logic controllers (103), each of which has a controller model, each item of data (Dᵢ) being associated with an acquisition time (tᵢ) of the plurality of acquisition times (tᵢ), the interface module (105) comprising at least one pair of computers (104) for each controller model, each computer (104) of the pair of computers (104) being configured to:
∘ collect each item of data (Dᵢ) received by each controller (103) having the controller model and eliminate each duplicate item of data (Dᵢ) received;
∘ send at least one command to at least one controller (103), depending on the data (Dᵢ) collected and/or instructions provided by the operator;
the computers (104) of the interface module (105) operating in asynchronous redundancy;
- A processing module (106) comprising a pair of computers (104), each computer (104) of the pair of computers (104) being configured to:
∘ receive from each computer (104) of the interface module (105), at least part of the data (Dᵢ) collected;
∘ sort the data (Dᵢ) received according to the acquisition time (tᵢ) thereof and eliminate duplicate data (Dᵢ) received;
∘ calculate, for each acquisition time (tᵢ), the corresponding information group (Iᵢ) from the corresponding sorted data (Dᵢ);
the computers (104) of the processing module (106) operating in active redundancy;
- An operator station management module (107) comprising a computer (104) for each operator station (108), each computer (104) being configured to:
∘ receive each information group (Iᵢ) calculated;
∘ send each information group (Iᵢ) corresponding to the requested information subset (S_{c}) to the corresponding operator station (108);
∘ manage the graphical interface of the corresponding operator station (108);
- A dual communication network (112) having a first channel (1121) and a second channel (1122) which are different, comprising a redundancy module (1123), each computer (104) of the system (100) being configured to:
∘ send to the redundancy module (1123) each message intended for at least one other computer (104) of the system (100), simultaneously on the first channel (1121) and the second channel (1122);
∘ receive each message intended for it from the redundancy module (1123) and send an acknowledgment to the redundancy module (1123);
the redundancy module (1123) being configured to:
∘ receive the message sent via the first channel (1121) and via the second channel (1122);
∘ delete the message received via the second channel (1122) if the message was received via the first channel (1121);
∘ modify the received message by adding an acknowledgment request;
∘ transmit the modified message simultaneously on the first channel (1121) and the second channel (1122) to the other computer (104) of the system (100).

2. System (100) according to claim 1, **characterized in that** it further comprises a database (111) distributed over at least some of the computers (104) of the system (100), which is configured to store and manage data (Dᵢ) and information (Iᵢ).

3. System (100) according to any one of the preceding claims,
**characterized in that** it further comprises a current time module (109) comprising a plurality of computers (104), each computer (104) of the current time module (109) being configured to:
- replicate at least part of the data (Dᵢ) and information (Iᵢ) of the processing module (106);
- provide the operator station management module (107) with the replicated data (Dᵢ) and information (Iᵢ) corresponding to the acquisition time (tⱼ) immediately preceding the current time (t_{c});
the computers (104) of the current time module (109) operating in functional redundancy.

4. System (100) according to any one of the preceding claims,
**characterized in that** it further comprises an archiving module (110) comprising a plurality of computers (104), each computer (104) of the archiving module (110) being configured to:
- replicate and archive part of the data (Dᵢ) and information (Iᵢ) of the processing module (106);
- provide the operator station management module (107) with the archived data (Dᵢ) and information (Iᵢ) corresponding to each acquisition time (tᵢ) preceding the acquisition time (tⱼ) immediately preceding the current time (t_{c});
the computers (104) of the archiving module (110) operating in functional redundancy.

5. System (100) according to any one of the preceding claims,
**characterized in that** the part of the collected data (Dᵢ) received by each computer (104) of the processing module (106) corresponds to the data (Dᵢ) collected by each computer (104) of the interface module (105) modified between two consecutive acquisition times (tᵢ).

6. Method (200) for controlling an industrial process implemented by the system (100) according to any one of the preceding claims, comprising the following steps:
- For each computer (104) of each pair of computers (104) of the interface module (105), collecting each item of data (Dᵢ) received by each controller (103) having a corresponding controller model and eliminating each duplicate item of data (Dᵢ) received, each item of data (Dᵢ) being associated with an acquisition time (tᵢ) preceding a current time (t_{c}, 201);
- Each computer (104) of the processing module (106) receiving at least part of the data (Dᵢ) collected by the interface module (105), sorting the received data (Dᵢ) according to the acquisition time (tᵢ) thereof, eliminating duplicate data (Dᵢ) received and calculating an information group (Iᵢ) for each acquisition time (tᵢ) from the corresponding sorted data (Dᵢ) (202);
- Each computer (104) of the operator station management module (107) receiving each information group (Iᵢ) calculated and sending, to each operator station (108), each information group (Iᵢ) received, included in an information subset (S_{c}) requested by an operator (203);
- Displaying the information subset (S_{c}) requested by each operator station (108) at the current time (t_{c}, 204);
- If the operator provides an instruction via the graphical interface of an operator station (108), sending the instruction to the interface module (105, 205);
- Sending, by means of the interface module (105), at least one command dependent on the data (Dᵢ) received and/or the instruction to at least one controller (103, 206);
each step (202, 203) of receiving by a computer (104) of the system (100) comprising an exchange (210) of at least one message between the computer (104) and another computer (104) of the system (100) comprising the following sub-steps:
- Sending the message simultaneously on the first channel (1121) and the second channel (1122) of the communication network (112) by means of the other computer (104) to the redundancy module (1123, 2101);
- The redundancy module (1123) receiving the sent message (2102);
- If the message is received via the first channel (1121) and via the second channel (1122), the redundancy module (1123) deleting the message received via the second channel (1122, 2103);
- The redundancy module (1123) modifying the message received by adding an acknowledgment request (2104);
- Transmitting the modified message to the computer (104) simultaneously on the first channel (1121) and the second channel (1122) by means of the redundancy module (1123, 2105);
- The computer (104) receiving the modified message and sending an acknowledgment to the redundancy module (1123, 2106).

7. Method (200) according to claim 6 implemented by the system (100) comprising the current time module (109), **characterized in that** it further comprises the following steps performed by each computer (104) of the current time module (109):
- Replicating at least part of the data (Dᵢ) and information (Iᵢ) from the processing module (105, 2071);
- Sending, to each computer (104) of the operator station management module (107), replicated data (Dᵢ) and information (Iᵢ) corresponding to the acquisition time (tⱼ) immediately preceding the current time (t_{c}, 2072).

8. Method (200) according to any one of claims 6 or 7 implemented by the system (100) comprising the archiving module (110), **characterized in that** it further comprises the following steps performed by each computer (104) of the archiving module (110):
- Replicating and archiving at least part of the data (Dᵢ) and information (Iᵢ) from the processing module (105, 2081);
- Sending, to each computer (104) of the operator station management module (107), archived data (Dᵢ) and information (Iᵢ) corresponding to each acquisition time (tᵢ) preceding the acquisition time (tⱼ) immediately preceding the current time (t_{c}, 2082).

9. Method (200) according to claim 7 or 8, **characterized in that** each step (2072, 2082) of sending by means of a computer (104) of the system (100) comprises an exchange (210) of at least one message between the computer (104) and at least one other computer (104) of the system (100) comprising the following sub-steps:
- Sending the message simultaneously on the first channel (1121) and the second channel (1122) of the communication network (112) by means of the computer (104) to the redundancy module (1123, 2101);
- The redundancy module (1123) receiving the sent message (2102):
- If the message is received via the first channel (1121) and via the second channel (1122), the redundancy module (1123) deleting the message received via the second channel (1122, 2103);
- The redundancy module (1123) modifying the message received by adding an acknowledgment request (2104);
- Transmitting the modified message to the other computer (104) simultaneously on the first channel (1121) and the second channel (1122) by means of the redundancy module (1123, 2105);
- The other computer (104) receiving the modified message and sending an acknowledgment to the redundancy module (1123, 2106).

10. Computer program product comprising instructions which, when the program is executed on the computers (104) of a system according to any one of claims 1 to 5, cause these computers to implement the steps of the method (200) according to any one of claims 6 to 9.

11. Computer program product according to claim 10, **characterized in that** it is written in ADA language.
